# FASCICULE DE BREVET EUROPEEN

(11) **EP 1 446 596 B1**
(45) Date de publication et mention de la délivrance du brevet: **14.02.2007**
(21) Numéro de dépôt: 02785564.2
(22) Date de dépôt: 30.10.2002
(51) Int. Cl.: F16J 15/06, F16J 15/10, F16J 15/02

(54) **PROCEDE DE FABRICATION D'UN CORDON DE JOINT D'ETANCHEITE COMPOSITE**
VERFAHREN ZUR HERSTELLUNG EINES VERBUNDDICHTUNGSSTRANGES
METHOD FOR MAKING A COMPOSITE SEALING JOINT STRIP

(30) Priorité: 21.11.2001 FR 0115039
(43) Date de publication de la demande: 18.08.2004
(73) Titulaire: Saint Gobain Performance Plastics Chaineux SA, 4650 Chaineux (BE)
(72) Inventeur: COMERT, Ahmet, B-4650 Chaineux (BE); PETIT, Dominique, B-4671 Blegny (BE); MERTENS, Marc, B-4900 Spa (BE)
(74) Mandataire: Colombier, Christian
(86) Numéro de dépôt international: PCT/FR2002/003731
(87) Numéro de publication internationale: WO 2003/044399

(56) Documents cités:
- EP-A- 0 197 845
- WO-A-99/26801
- DE-A- 1 625 976
- DE-U- 29 922 509
- US-A- 3 427 776
- US-A- 4 273 827

## Description

La présente invention concerne un procédé de fabrication d'un cordon de joint d'étanchéité composite, adapté pour l'assemblage d'un élément modulaire, tel que notamment un module de porte de véhicule automobile, prêt à être solidarisé sur un cadre ou autre surface.

La tendance actuelle, notamment dans le domaine des véhicules automobiles, est dès la conception et la réalisation de ces éléments dits modulaires, notamment pour des portes de véhicule, d'intégrer à ces éléments modulaires des fonctions additionnelles, qui sont ordinairement remplies par le cadre ou l'autre surface, sur lesquels doit venir coopérer ledit élément. On entend aussi par élément modulaire soit un panneau de finition interne qui est destiné à habiller la portière de véhicule visible de l'intérieur du véhicule, soit une feuille d'étanchéité intermédiaire placée entre ledit panneau de finition et la portière automobile.

Ceci a pour but de faciliter le montage du véhicule en réduisant le nombre des opérations d'assemblage sur une ligne de montage, des équipements et/ou accessoires solidaires de l'élément modulaire ayant été pré montés dans un atelier ou une unité distincte.

Ainsi, on connaît des éléments modulaires pour porte de véhicule, qui se présentent généralement sous la forme de flasque d'habillage qui sont adaptés pour venir coopérer au niveau de la face interne de la porte du véhicule, afin de venir masquer et protéger par exemple les mécanismes de fermeture de la porte et/ou les mécanismes assurant le mouvement des vitres latérales au sein de la porte.

L'élément modulaire est généralement fixé sur un élément de porte par vissage, ou par des moyens d'emboîtement et il est nécessaire, qu'au niveau de l'interface entre l'élément modulaire et l'élément de porte, d'interposer une garniture d'étanchéité afin de préserver le volume situé à l'intérieur de ladite porte, des agressions environnementales (humidité, poussière, vibration..).

A cette fin, il est connu d'interposer, en tant que garniture d'étanchéité, au niveau de l'interface, un cordon de joint moussé du type de celui visé dans le document EP 0 930 323.

Bien que ce joint moussé remplisse au mieux sa fonction d'étanchéité lorsque l'élément de porte et l'élément modulaire coopèrent parfaitement entre-eux, il arrive parfois, que, malgré une solidarisation optimale entre les deux éléments en regard, le cordon de joint ne soit pas comprimé sur toute la totalité de son pourtour et qu'une brèche soit ouverte, créant un passage éventuel aux agressions environnementales. Cette situation est généralement consécutive à des variations dans les tolérances dimensionnelles de fabrication de l'élément de porte et/ou de l'élément modulaire, ces tolérances pouvant être minimales simultanément.

On connaît par ailleurs par le document US-A-3 427 776 un procédé de réalisation d'une d'un cordon de joint d'étanchéité composite sur un élément choisi entre un premier élément et un second élément, ledit cordon de joint d'étanchéité composite étant de forme et de section déterminée et comportant au moins une partie d'accrochage adaptée pour coopérer avec l'un des éléments, au moins une partie élastique, et au moins une partie adhésive adaptée pour coopérer au niveau de l'autre élément, lorsque les premier et second éléments seront fixés ensemble.

On connaît en outre par le document EP-A-0197 845 un procédé de réalisation par extrusion d'un cordon de joint d'étanchéité composite sur un élément choisi entre un premier élément et un second élément, ledit cordon de joint d'étanchéité composite étant continu et de forme et de section déterminée et comportant au moins une partie d'accrochage adaptée pour coopérer avec l'un des éléments, au moins une partie élastique, et au moins une partie adhésive adaptée pour coopérer au niveau de l'autre élément, lorsque les premier et second éléments seront fixés ensemble.

Dans le but de permettre un temps de montage le plus bref possible pour ces éléments modulaires, il apparaît souhaitable de les pré-équiper de moyens d'étanchéité sur ligne en un temps limité.

La présente invention a pour but de proposer un nouveau mode de préparation d'éléments modulaires pourvus de moyens d'étanchéité, aptes à être stockés pendant une certaine période, pour pouvoir être montés directement sur un cadre ou toute autre surface réceptrice, notamment un élément de porte avec un nombre limité d'opérations. Le moyen d'étanchéité devrait être le plus efficace possible pour garantir une étanchéité entre l'élément modulaire et la surface réceptrice en regard, quels que soient les modes de sollicitation mécanique exercés sur le moyen d'étanchéité (compression, extension, cisaillement).

Ce but, ainsi que d'autres qui apparaitront par la suite, a été atteint avec un procédé de réalisation par extrusion d'un cordon de joint d'étanchéité composite sur un élément choisi entre un premier élément et un second élément, ledit cordon de joint d'étanchéité composite étant continu de forme et de section déterminée et comportant au moins une partie d'accrochage adaptée pour coopérer avec l'un des éléments, au moins une partie élastique, et au moins une partie adhésive adaptée pour coopérer au niveau de l'autre élément, lorsque les premier et second éléments seront fixés ensemble, qui se caractérise en ce que la partie élastique présente sur sa surface périphérique une peau formant une enveloppe étanche, et la partie adhésive est constituée d'un adhésif à pouvoir collant permanent.

Grâce à la fabrication d'un cordon de joint d'étanchéité composite comportant une partie élastique interposée entre une partie adhésive à pouvoir adhésif permanent et une partie d'accrochage, ceci permet de garantir une parfaite étanchéité entre les deux éléments, la partie adhésive et la partie d'accrochage demeurant toujours solidaires de leur élément respectif quel que soit le mode de déformation de la partie élastique dudit cordon de joint d'étanchéité composite.

En outre, la constitution composite du cordon de joint d'étanchéité permet de lui faire remplir lui-même un certain nombre de fonctions additionnelles, telle que la participation à la fixation entre les deux éléments, l'amortissement des sons et des chocs, en adaptant une portion spécifique du cordon.

Dans des modes de réalisation préférés de l'invention, on peut éventuellement avoir recours en outre à l'une et/ou à l'autre des dispositions suivantes :
- on dépose le cordon de joint d'étanchéité composite au préalable dans un moule de transfert avant son application sur l'un des premier ou second éléments,
- on dépose directement le cordon de joint d'étanchéité composite sur l'un des premier ou second éléments,
- le cordon de joint d'étanchéité composite est formé par extrusion d'un produit mono-composant,
- le cordon de joint d'étanchéité composite est formé, dans une tête d'extrusion, par réaction d'au moins deux composants amenés séparément au sein de ladite tête d'extrusion,
- la partie élastique du cordon de joint d'étanchéité composite est un matériau moussé,
- la partie élastique est à base d'élastomère thermoplastique ou de polyuréthanne, modifié ou non par un élastomère,
- la partie élastique représente au moins 50 % en volume du cordon de joint d'étanchéité composite,
- la partie adhésive est venue avec la pellicule pelable et est déposée par transfert sur la partie élastique du joint d'étanchéité composite, lors de l'enlèvement de ladite pellicule pelable,
- la partie adhésive et la partie élastique du cordon de joint d'étanchéité composite sont formés à partir d'un produit identique
- la partie d'accrochage du cordon de joint d'étanchéité composite est constituée d'une partie adhésive,
- la partie d'adhésive est co-extrudée avec la partie élastique,
- la partie adhésive est déposée sur l'un des premier et second éléments et la partie élastique est déposée sur l'autre desdits premier et second éléments,
- la pellicule pelable est constituée d'un produit pulvérisable.

Un exemple utile pour comprendre l'invention vise un élément, tel que notamment un module de porte de véhicule automobile, prêt à être solidarisé sur un cadre ou autre surface, caractérisé en ce que l'élément est doté d'un cordon de joint d'étanchéité composite de forme et de section déterminée, ledit d'un cordon de joint d'étanchéité composite comportant au moins une partie d'accrochage adaptée pour coopérer au niveau d'une surface ou cadre dudit élément, au moins une partie élastique et au moins une partie adhésive.

Le cordon de joint d'étanchéité composite peut remplir une fonction d'amortisseur, vis-à-vis des sons contribuant à l'insonorisation de l'ensemble ou vis-à-vis des chocs ou contraintes en absorbant des chocs ou déformations mécaniques éventuelles. Il peut aussi rattraper les tolérances sur les dimensions d'une carrosserie.

Dans un mode de réalisation particulier, le cordon de joint d'étanchéité composite comporte une partie élastique ou visco-élastique élaborée dans un matériau moussé, qui peut être fabriqué par un procédé de moussage chimique d'une matière plastique au moyen d'un agent chimique (que ce soit un additif ou une fonction réactive de la matière plastique elle-même) libérant un gaz qui expanse la matière plastique, ou par un procédé de moussage physique d'une matière plastique au moyen d'un gaz mélangé à la matière plastique pour expanser cette dernière.

Un autre type de moussage ou d'expansion consiste en l'ajout de micro sphères expansées ou expansibles, par exemple de marque EXPANCEL de Akzo Nobel, ou de microbilles de verre, par exemple de marque ARMOSPHERES de A.M.L. International ou E-SPHERES de Envirospheres Pty Ltd.

Parmi les matières utilisables pour réaliser la partie élastique, on peut citer à titre d'exemple du polychlorure de vinyle plastifié, des élastomères thermoplastiques ou des polyuréthannes, modifiés ou non par un élastomère, des polyoléfines ou des caoutchoucs, notamment butyle, EPDM (éthylène-propylènediène), nitrile, styrène-butadiène...

De manière générale, les élastomères thermoplastiques (TPE) consistent en des mélanges de polymères ou en des copolymères séquencés manifestant une phase thermoplastique et une phase d'élastomère éventuellement liées chimiquement entre elles dans le cas de copolymère. Un exemple en est le produit de marque SANTOPRENE de AES qui consiste en un mélange de polypropylène (PP) et d'EPDM réticulé sous formes de nodules noyés dans la phase continue de PP, avec un rapport pondéral variable du PP par rapport à l'EPDM. On connaît aussi des produits à base de chaînes copolymères séquencés avec des séquences élastomères, notamment isoprène ou butadiène hydrogéné ou non, liées à des séquences thermoplastiques, notamment de polystyrène, par exemple les produits de marque KRATON de Shell.

On connaît également des uréthannes thermoplastiques (TPU) disponibles sous forme d'un polymère non réactif, obtenu à partir de plusieurs sources de polyol, dont au moins une forme une séquence à propriétés thermoplastiques et au moins une autre forme une séquence à propriétés élastiques. Des exemples sont les produits PEARLTHANE ou PEARLCOAT de Merquinsa, ou ELASTOLLAN de Elastogran.

On peut aussi former la partie élastique du cordon de joint d'étanchéité composite à base de polyuréthanne avec une grande variété de compositions réactives disponibles commercialement, du type mono- ou bi-composant. A titre d'exemple on peut citer notamment des compositions mono-composant à base de pré polymère de polyuréthanne à squelette polyester, poly éther, polycaprolactone, polyoléfine, polysiloxane, polybutadiène. Un pré polymère à terminaisons isocyanates durcit à l'humidité avec une certaine propension au moussage ; un prépolymère à terminaisons siloxane durcit à l'humidité sans mousser. Ces compositions de polyuréthanne peuvent être modifiées par un élastomère notamment caoutchouc nitrile, SBR, ou butyle, ou élastomère thermoplastique ou un polymère présentant une certaine flexibilité non réticulable tel que des polyoléfines ou du PVC plastifié. Des exemples de telles compositions utilisables pour fabriquer des matériaux moussés ou cellulaires, notamment par adjonction d'un gaz de moussage, sont décrits dans EP-A-0 326 704 ou EP-A-0 930 323.

La matière de la partie élastique du cordon de joint d'étanchéité composite peut renfermer en outre des charges organiques ou minérales, telles que du talc, de la silice, du carbonate de calcium, de l'alumine, ou des métaux.

La partie élastique du cordon de joint d'étanchéité composite a une densité inférieure à 2,5, notamment de l'ordre de 0,8 à 2,5 pour les matériaux non cellulaires ou de 0,03 à 1 pour les matériaux moussés ou cellulaires.

Le cordon de joint d'étanchéité composite comprend d'autre part une partie adhésive accolée à l'une des faces de la partie élastique et destinée à participer à la liaison entre des premier et second éléments, en particulier entre un module de porte et une porte de véhicule automobile. Cette partie adhésive se présente sous la forme d'une couche d'adhésif à pouvoir collant permanent. En variantes non-revendiquées mais utiles à la compréhension de l'invention, la couche d'adhésif est constituée d'un adhésif thermoactivable, photoactivable, chimioactivable, repositionnable et/ou réactif à l'humidité. Un même adhésif peut présenter plusieurs de ces propriétés cumulées.

Dans le cas de l'utilisation d'un adhésif repositionnable, celui-ci est formulé de façon à ce que lors de la séparation des deux éléments, une solution de continuité nette apparaisse, laissant un des deux éléments vierge de tout résidu d'adhésif (utile lors des démontages de portière, permet la réutilisation du module). A contrario, lorsque cet adhésif n'est pas repositionnable, il est formulé de façon à ce que la rupture se produise au sein de la partie élastique, laissant un dépôt continu d'adhésif sur chacun des éléments.

La couche d'adhésif est constituée d'un adhésif protégé par une pellicule pelable. En variante, on dépose sur l'une des faces de la pellicule pelable un une couche d'adhésif, qui par transfert et après enlèvement de ladite pellicule, se trouve sur la partie élastique du joint.

L'activation thermique requiert généralement l'exposition de l'adhésif à des températures dépassant la température ambiante en toute saison des climats tempérés ; il n'est généralement pas nécessaire de prévoir une protection particulière pour neutraliser l'adhésif pendant la période de stockage. En variante, on peut aussi utiliser des adhésifs (notamment à base d'époxy) qui doivent être stockés sous très basse température afin de demeurer inertes.

De même un adhésif activable par un réactif chimique déterminé n'est généralement pas sensible à l'atmosphère ambiante. Un adhésif photoactivable par de la lumière visible peut avantageusement être protégé de la lumière par une pellicule opaque. Un adhésif réactif à l'humidité doit être protégé par une pellicule barrière à l'humidité pour être stockable longtemps. Un adhésif à pouvoir collant permanent doit être protégé de tout contact pendant son stockage. Dans tous les cas, une pellicule de protection même si elle n'est pas obligatoire, est souhaitable pour éviter de souiller la surface de l'adhésif par des poussières qui pourraient gêner la liaison adhésive finale.

En tant que pellicule, on peut utiliser un film plastique notamment de polyéthylène, polyester, polychlorure de vinyle ou de vinylidène, polyamide, enduit ou non d'une couche de silicone, notamment fluorosilicone pour protéger en particulier une couche adhésive à base de silicone. Le film peut également être renforcé par une couche de métal, notamment d'aluminium, ou être constitué par un composite.

Des exemples d'adhésifs à activation thermique comprennent des résines de type époxy, polyuréthanne, notamment des pré-polymères à terminaisons isocyanates bloquées ou non, polyéther ou polyester, notamment polyacrylique, oxyalkylène, vinyle ainsi que des thermoplastiques de type polyoléfine, notamment polyéthylène ou polypropylène, polyamide. La couche d'adhésif peut être constituée d'un adhésif hot melt parmi lesquels on connaît les caoutchoucs butyle, notamment styrène-butadiène, les copolymères éthylène-acétate de vinyle (EVA), les polyamides, polyaminoamides, ou copolymères dérivés, des polyesters, et des compositions à base de polyuréthanne. L'adhésif peut renfermer des additifs de durcissement ou catalyseurs de réticulation activés par la chaleur.

Des adhésifs réactifs ou durcissant à l'humidité peuvent être choisis parmi des prépolymères de polyuréthanne à terminaisons isocyanate, bloqué ou non, ou silane, des silicones.

Des adhésifs chimioactivables peuvent notamment être des réactifs durcissant par oxydation, ou bien des compositions renfermant un adhésif et un catalyseur de durcissement encapsulé ou activable par la chaleur.

Des exemples d'adhésifs à pouvoir collant permanent sont constitués notamment par des polymères acryliques, des élastomères, thermoplastiques ou non, des polyoléfines, des polyuréthannes, dont le pouvoir collant permanent est conféré ou amélioré par l'ajout de résines « tackyfiantes » et d'huiles, ou encore par des polyuréthannes formés de diol(s) ou diamine(s) et de diisocyanate(s) en proportions non-stoechiométriques.

En ce qui concerne la mise en oeuvre de l'additif pour former ladite couche d'adhésif, on peut utiliser un adhésif de type « hot-melt » susceptible d'être mis en oeuvre à l'état fondu, ou un adhésif liquide ou dans un véhicule liquide, notamment en solution organique ou en suspension/dispersion aqueuse qui forme une couche adhésive par évaporation du solvant véhicule ou diluant.

Ces variantes ne sont cependant pas des modes de réalisation de l'invention. L'adhésif peut être pulvérisé et se présenter sous forme de mousse.

L'adhésif est choisi pour être compatible avec la matière constituant la partie élastique du cordon de joint d'étanchéité composite, quoiqu'il soit envisageable de traiter la face interne de la couche d'adhésif et/ou la surface de contact de la partie élastique du cordon de joint d'étanchéité composite avec des promoteurs d'adhésion ou primaires, voire d'interposer un autre adhésif entre la partie élastique du cordon de joint d'étanchéité composite et la couche d'adhésif.

La liaison de la couche d'adhésif sur la partie élastique du cordon de joint d'étanchéité composite peut être renforcée par le fait que l'une au moins des surfaces de la partie élastique et de la couche d'adhésif qui sont en contact l'une de l'autre est texturée. Le relief de la texturation a pour effet d'augmenter la surface de contact entre ces deux parties du cordon de joint d'étanchéité et donc de renforcer l'adhésion.

Le cordon de joint d'étanchéité composite comprend en outre une partie d'accrochage destinée à participer à la liaison entre les premier et second éléments, en particulier entre le module de porte et la porte de véhicule automobile. Cette partie d'accrochage est située sur l'une des faces de la partie élastique du cordon de joint d'étanchéité composite, cette face étant cependant différente de celle qui est revêtue de la couche d'adhésif précédemment citée. A titre d'exemple non limitatif, cette partie d'accrochage est positionnée symétriquement par rapport à la couche d'adhésif préalablement déposée sur la partie élastique.

Cette partie d'accrochage peut se présenter :
- soit sous la forme d'une face de la partie élastique, cette face étant alors destinée à coopérer au niveau d'une rainure ou analogue réalisée sur l'un des premier et second éléments, une zone de la partie élastique est emprisonnée au sein de la rainure et réalise ainsi une partie d'accrochage,
- soit sous la forme d'une couche d'adhésif analogue à celle qui est déjà située sur l'une des autres faces de la partie élastique du cordon de joint d'étanchéité composite.

Quel que soit le mode de réalisation de la partie d'accrochage, celle-ci est destinée à coopérer au niveau de l'une des parois de l'un des premier et second éléments.

La liaison entre les premier et second éléments est réalisée de la manière suivante :

Après avoir élaboré le cordon de joint d'étanchéité selon l'invention par un procédé de fabrication qui sera explicité plus en détail ci-après, on fait coopérer la partie adhésive à pouvoir collant permanent du cordon de joint d'étanchéité composite sur l'une des faces en regard appartenant au premier ou second élément, la partie élastique du cordon de joint d'étanchéité composite est sollicitée ou déformée mécaniquement (par exemple en compression, en extension, en cisaillement), la partie d'accrochage du cordon de joint d'étanchéité composite est alors approchée puis solidarisée à une autre face de l'assemblage en regard appartenant à l'autre élément. Cette solidarisation au niveau de la partie d'accrochage s'effectue soit mécaniquement, soit à l'aide d'une couche adhésive.

Le procédé selon l'invention permet de conformer un cordon de joint d'étanchéité composite permettant de reproduire un motif d'étanchéité entre deux éléments, avantageusement lorsque ce motif est une courbe fermée qui suit notamment au moins une partie de la périphérie de l'élément modulaire. Le procédé permet en outre de conformer également la section du cordon d'étanchéité pour qu'il s'adapte parfaitement dans l'espace qui lui est réservé dans l'assemblage final, en prenant en compte ses capacités à se déformer.

Suivant une forme de réalisation, le cordon de joint d'étanchéité composite est formé directement sur l'un des premier ou second éléments.

Après avoir déposé à l'aide d'un procédé d'extrusion une couche d'adhésif sur l'une des faces dudit élément et selon le motif d'étanchéité désiré, on procède alors par un procédé d'extrusion similaire au précédent, sur la couche d'adhésif et selon le même motif d'étanchéité, au dépôt d'un produit mono-composant ou pluri-composants, ce produit devant former la partie élastique du cordon de joint d'étanchéité composite. Dans le cas d'un produit à plusieurs composants, le joint peut être formé, dans une tête d'extrusion, par réaction d'au moins deux composants amenés séparément au sein de ladite tête d'extrusion.

Lorsque la partie élastique du cordon de joint d'étanchéité composite s'est formée, qu'elle a atteint sa section désirée et ses caractéristiques mécaniques en terme notamment de souplesse, d'état de surface, de dureté, elle présente alors une surface de liaison. Cette surface de liaison est destinée à coopérer au niveau d'une surface de l'autre élément modulaire (le premier ou le second). La coopération a lieu soit par collage ou par accrochage.

Dans le cas du collage, le cordon de joint d'étanchéité composite préalablement constitué peut être doté d'une surface adhésive en tant que surface de liaison du côté où l'élément modulaire est présenté, ou bien c'est l'élément modulaire lui-même qui présente une surface adhésive, éventuellement l'élément modulaire adhère au cordon parce qu'il (ou au moins une partie de ce dernier) est formé au contact du cordon composite à partir d'une masse adhérant à celui-ci.

Suivant une autre forme de réalisation, différente des réalisations précédentes, le cordon de joint d'étanchéité composite peut être formé par dépose dans une cavité de moule de la couche d'adhésif et moulage de la partie élastique du cordon de joint d'étanchéité composite dans la cavité du moule par dépose d'un produit moulable adapté sur la couche d'adhésif dans la cavité du moule.

En fonction du mode d'obtention de l'élément modulaire utilisé, on peut alors :
- soit former le cordon de joint d'étanchéité composite d'un seul tenant avec l'un des éléments modulaires, on peut donc mouler l'élément modulaire (ou au moins une portion de ce dernier) directement sur la couche d'adhésif de façon à réaliser simultanément l'élément modulaire (ou la portion d'élément modulaire) et le cordon de joint d'étanchéité composite.
- soit former séparément le cordon de l'élément modulaire, on peut soit transférer le cordon composite sur un élément modulaire préfabriqué, soit mouler l'élément modulaire au contact du cordon de joint d'étanchéité dans ladite cavité. On peut alors faire durcir le cordon de joint d'étanchéité dans le moule et/ou après transfert du cordon de joint d'étanchéité composite sur l'élément modulaire.

Le produit moulable peut être déposé dans un moule fermé par injection d'un liquide. On peut aussi procéder dans une cavité de moule par extrusion (ou autre méthode de distribution adaptée) d'une matière visqueuse ou pâteuse, à l'aide de moyens distributeurs mobiles le moule étant fixe, ou bien de moyens distributeurs fixes le moule étant alors mobile.

La technique de moulage s'applique également à la réalisation de la partie adhésive du cordon de joint d'étanchéité composite reproduisant le motif de collage, cette partie adhésive du cordon de joint d'étanchéité étant protégée ou activable sur une face et présentant une surface de liaison à l'élément modulaire. La partie adhésive peut être obtenue dans une cavité moule, renfermant éventuellement une pellicule de protection, par moulage-injection ou par extrusion d'une matière visqueuse dans la cavité.

Dans le cas où la partie adhésive du cordon de joint d'étanchéité composite serait protégée par une pellicule pelable, la matière adhésive moulable est choisie parmi celles dont le module d'élasticité à l'état non réticulé est suffisant pour autoriser le pelage de la pellicule sans arrachement de la partie élastique du cordon de joint d'étanchéité.

De telles matières comprennent notamment des systèmes réticulables à l'humidité susceptibles d'être protégés par une pellicule barrière anti-humidité, notamment des systèmes de type polyuréthanne mono-composant, de préférence thermoplastique, éventuellement modifié par un élastomère. Un tel système est un pré-polymère de polyuréthanne à squelette de type polyester, poly éther ou polyoléfine, obtenu par exemple à partir d'un polyol et d'un polyisocyanate dont l'un au moins comporte un squelette polymère ou oligomère tel que précité.

En variante, le cordon de joint d'étanchéité composite peut être formé par dépose sur la couche d'adhésif dans la cavité de moule de la partie élastique du cordon de joint d'étanchéité préalablement formée, notamment moulée, la superposition des deux parties dans un autre moule permettant de maîtriser la forme précise du cordon de joint d'étanchéité. Dans cette variante, la partie élastique du cordon de joint d'étanchéité préalablement formée peut être une partie intégrante d'un élément modulaire (ou une portion de ce dernier) fabriqué(e) par moulage.

Dans les deux cas, la couche d'adhésif peut être déposée dans le moule sous forme d'une bande pré-constituée ou de matière réactive, liquide ou visqueuse. L'adhésif peut aussi être apporté avec la partie élastique du joint d'étanchéité par co-extrusion.

De préférence, on applique préalablement une pellicule de protection pelable sur la surface de la cavité de moule comme agent facilitant le démoulage. Cette pellicule pelable peut constituer la protection de la partie adhésive. En particulier, la pellicule peut avoir de propriétés de barrière à l'humidité pour protéger une couche d'adhésif réactif à l'humidité.

Dans le cas de l'application d'un cordon de joint d'étanchéité composite réalisé séparément et pour lequel la partie d'accrochage de celui-ci est constituée d'une couche d'adhésif, on peut disposer cet adhésif entre le cordon de joint d'étanchéité composite et l'élément modulaire. Cet adhésif peut être identique ou différent de celui déjà utilisé pour constituer la partie adhésive du cordon de joint d'étanchéité composite.

Un tel cordon de joint d'étanchéité composite peut être fabriqué en notamment en co-extrudant l'adhésif sur l'une au moins des faces de la partie élastique du cordon de joint d'étanchéité, le produit de co-extrusion pouvant être déposé dans une cavité de moule préalablement équipée d'une pellicule de protection, pour prendre sa forme définitive. Par co-extrusion, on entend ici aussi bien la formation de la partie élastique et d'au moins une partie adhésive du cordon de joint d'étanchéité simultanément au dépôt au moyen d'une tête d'extrusion alimentée en au moins deux matières extrudables, que l'application d'au moins une matière adhésive dans une tête d'extrusion à travers laquelle défile la partie élastique du cordon de joint d'étanchéité préalablement formé, notamment par extrusion.

Dans une autre forme de réalisation, la matière de la partie élastique du cordon de joint d'étanchéité composite est choisie pour être elle-même adhésive et coller à l'élément modulaire à l'état non durci ou partiellement durci.

Un procédé de fabrication consiste à déposer par exemple dans une cavité de moule, pré-équipée d'une pellicule de protection, une couche d'adhésif, puis une matière moulable constituant la partie élastique du cordon de joint d'étanchéité composite, (cette partie élastique pouvant éventuellement être recouverte par une couche d'adhésif) et ensuite de presser l'un des premier ou second éléments contre la partie élastique du cordon de joint d'étanchéité pour coller le cordon de joint d'étanchéité sur ledit élément modulaire. Ensuite, on peut éventuellement faire durcir au moins partiellement la partie élastique du cordon de joint d'étanchéité composite dans ce moule ainsi fermé par l'élément modulaire, avant de retirer ledit élément modulaire sur lequel est fixé le cordon de joint d'étanchéité composite, le cas échéant y compris sa pellicule de protection. Le durcissement du cordon de joint d'étanchéité peut être effectué ou terminé en dehors du moule par refroidissement ou par réaction avec l'humidité de l'air.

Le procédé selon l'invention permet la fabrication en grande série d'éléments modulaires prêts à être montés, cette fabrication pouvant être automatisée. Le montage final de ces éléments modulaires est très rapide et répond au besoin de réduction du temps de montage d'ensembles tels que les véhicules automobiles.

D'autres détails et caractéristiques avantageuses ressortiront ci-après à la lecture de la description d'exemples illustratifs, mais non limitatifs de l'invention, faite en référence aux dessins annexés sur lesquels :
- la figure 1 représente une vue en perspective de l'assemblage d'un module de porte sur une portière de voiture automobile ;
- la figure 2 représente une vue en coupe de la zone de bordure du module de porte équipé d'un cordon de joint d'étanchéité composite selon un premier mode de réalisation ;
- la figure 3 représente une vue en coupe de la zone de bordure du module de porte équipé d'un cordon de joint d'étanchéité composite selon une deuxième mode de réalisation ;
- la figure 4 illustre la fabrication du cordon de joint d'étanchéité composite par transfert ;
- la figure 5 illustre la fabrication du cordon de joint d'étanchéité composite par extrusion directe sur l'un des éléments ;
- la figure 6 représente une vue en coupe de la zone de bordure du module de porte équipé d'un cordon de joint d'étanchéité composite selon un troisième mode de réalisation

On précise tout d'abord que par souci de clarté les proportions relatives entre les différents éléments représentés ne sont pas respectées.

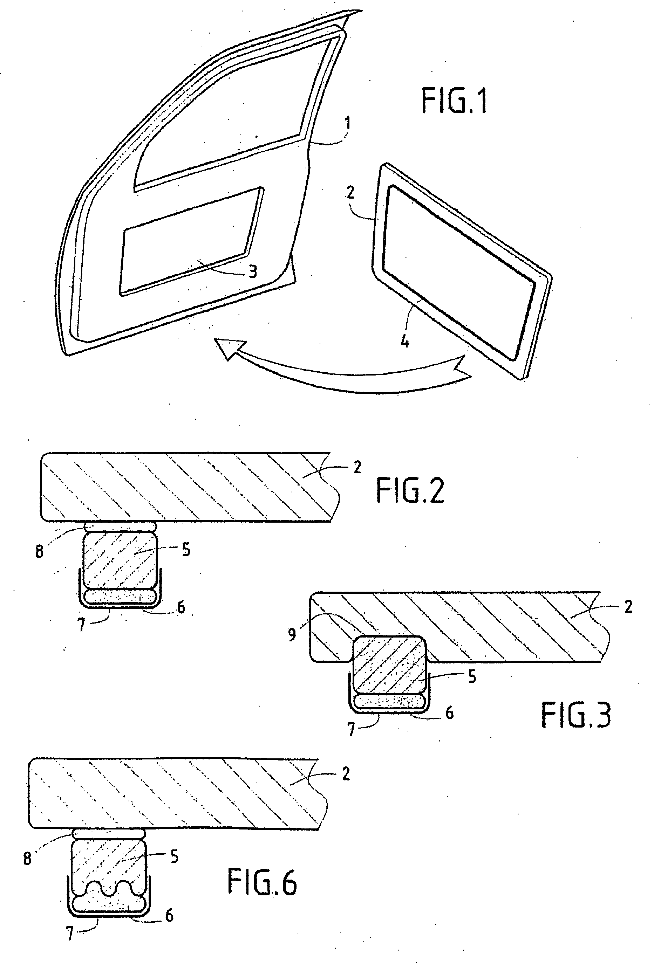

La figure 1 montre une vue en perspective d'un premier élément notamment une portière 1 de véhicule automobile équipée d'un second élément notamment un module de porte 2 rapporté sur une surface 3 ou cadre appartenant à ladite portière 1.

Le module de porte 2 est représenté en position non montée pour rendre visible sa face qui est dirigée vers la surface 3 de la portière 1 du véhicule. Pour simplifier la lecture de la figure, aucun accessoire ou équipement n'est représenté sur le module de porte, mais il va de soi que tous les équipements usuels tels que vide poche, etc. peuvent être intégrés à ce module.

Le montage du module de porte 2 sur la surface 3 de la portière 1 se fait en interposant entre la face interne du module de porte 2 et la surface 3 de la portière 1 un cordon de joint d'étanchéité composite 4. Dans ce cas le motif de joint d'étanchéité est en forme de cadre fermé longeant la périphérie du module de porte. Le cordon de joint d'étanchéité 4 doit assurer l'étanchéité entre le module de porte 2 et la portière 1 et peut aussi exercer d'autres fonctions telle que l'absorption des vibrations entre l'espace intérieur et l'espace extérieur délimités par ces deux parties ainsi que la fixation entre les deux éléments.

La structure du cordon de joint d'étanchéité 4 est composite selon l'invention et est visible sur la figure 2 qui montre également la structure du module 2. Sur cette figure, le module est représenté tel qu'il est avant de procéder au montage sur le véhicule.

Le cordon de joint d'étanchéité composite 4 est formé d'une partie élastique 5 liée à l'un des premier ou second éléments et d'une partie adhésive 6 solidaire de la partie élastique du cordon de joint d'étanchéité et protégée par une pellicule 7.

Une composition préférée pour la partie flexible 5 est la suivante (toutes les proportions sont exprimées en % en poids) :
- Polyol : Lupranol 2043 vendu par BASF : 81,0%
- Eau : 0,8%
- Isocyanate : Suprassec X2647 vendu par Huntsman : 17,0%
- Catalyseur : Toyocat B41 vendu par Tosoh : 1,2%

La liaison entre la partie élastique 5 du cordon de joint 4 et l'un des éléments peut soit être réalisée par l'intermédiaire d'une seconde partie adhésive 8 (figure 2) ou soit par l'intermédiaire d'une partie d'accrochage 9 (figure 3).

Le cordon de joint d'étanchéité 4 a une section calibrée en fonction de l'écartement autorisé entre les premier et second éléments. Ici la section est représentée sensiblement carrée mais peut être tout autre. Pour remplir la fonction d'étanchéité, et pour compenser les tolérances de fabrications de la carrosserie, la partie élastique 5 du cordon de joint d'étanchéité 4 est faite d'un matériau visco-élastique

A l'opposé du module de porte, le cordon de joint d'étanchéité 4 est muni d'une couche adhésive 6 recouvrant au moins une partie de la surface du cordon.

On utilise une quantité d'adhésif aussi faible que possible pour assurer un collage efficace, alors que la partie élastique 5 du cordon de joint d'étanchéité 4 occupe au moins environ 50% du volume du cordon de joint d' étanchéité 4. La matière adhésive est un adhésif à pouvoir collant (tack) permanent, en variante, qui n'est pas un mode de réalisation de l'invention, on peut utiliser un polyuréthanne durcissant à l'humidité. La pellicule 7 a généralement pour but d'éviter, pendant la période de stockage chez le fabricant de module ou chez le constructeur automobile, que des poussières ne viennent souiller le cordon d'étanchéité et d'éviter tout contact avec une surface autre que la surface finale d'assemblage qui provoquerait un endommagement de la couche d'adhésif 6. Elle a également pour fonction de protéger la couche d'adhésif contre les conditions extérieures, notamment humidité, lumière, oxygène, susceptibles de provoquer l'activation intempestive de l'adhésif 6.

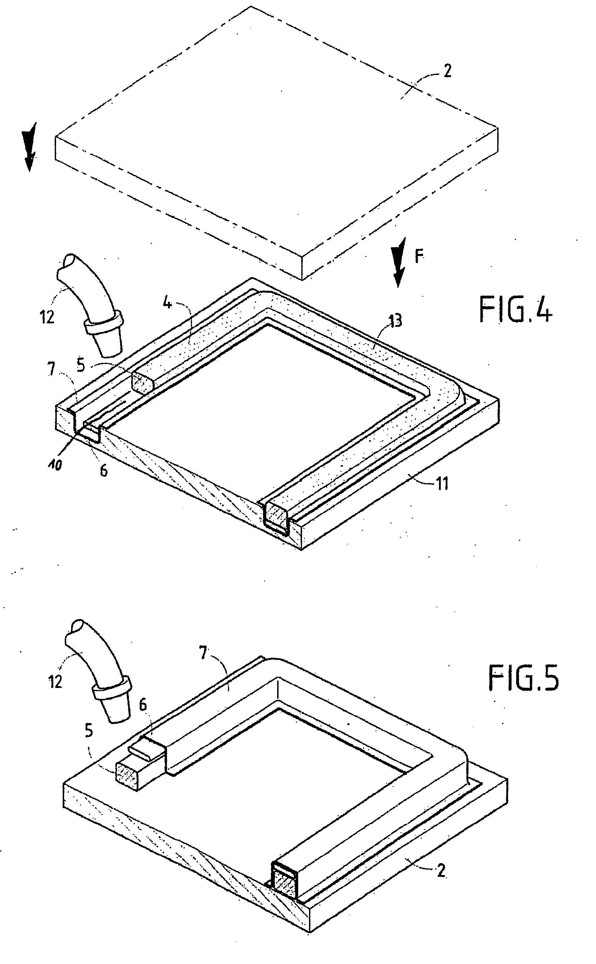

La fabrication du cordon de joint d'étanchéité composite est illustrée sur la figure 4. Dans la cavité 10 d'un moule 11 on dispose une pellicule 7 dont la face en contact avec le moule (qui sera la face externe de la pellicule, une fois le cordon 4 terminé) peut être en polyéthylène pour servir d'agent de libération de la matière moulée. Selon une variante non représentée sur les figures, la pellicule 7 est déposée par pulvérisation. Sur la face interne de la pellicule 7 on dépose une couche d'adhésif 6 sous forme de matière fluide ou visqueuse, qui est conformée dans la cavité. Ensuite on dépose sur la couche d'adhésif 6 la matière de la partie élastique 5 du cordon de joint d'étanchéité au moyen d'une buse d'extrusion 12 que l'on déplace tout le long de la cavité 10 en un circuit fermé (on peut aussi prévoir que la buse d'extrusion 12 demeure immobile et que le moule se déplace par rapport à la buse) . De la sorte, on peut former un cordon 4 en forme de cadre sans discontinuité, n'entraînant donc aucun défaut d'étanchéité. La buse 12 peut avoir une section calibrée pour donner une forme préliminaire à la matière de la partie élastique 5 du cordon 4, qui termine d'être conformée dans la cavité 10 du moule 11.

Dès la fin de la dépose de la matière de la partie élastique 5 du cordon de joint d'étanchéité 4, le cordon de joint d'étanchéité composite peut être installé sur le module de porte, par transfert sur ce dernier : on vient presser (dans le sens des flèches F) le module de porte 2 figuré en trait mixte contre la surface 13 du cordon 4 non encore durcie et la matière adhère spontanément à la surface du module. En variante, on peut appliquer sur la surface 13 de la partie élastique 5 du cordon de joint d'étanchéité 4 durci ou non (si la matière du cordon 4 n'adhère pas spontanément au matériau du module 2) une couche d'adhésif supplémentaire, identique ou non à celui de la couche 6. C'est cette deuxième couche qui forme alors la surface 13 adhésive du cordon 4.

Après un temps de pose plus ou moins long selon les matières employées, le module de porte 2 peut être enlevé de la surface du moule avec le cordon composite 4 lié à sa surface. La pellicule 7 est également extraite de la cavité du moule et reste attachée à la couche d'adhésif 6 qu'elle protège immédiatement de la poussière et/ou de l'humidité.

Le module 2 ainsi équipé du cordon de joint d'étanchéité 4 peut être maintenu pendant un temps suffisant pour le durcissement ou l'acquisition des propriétés structurelles du cordon 4, puis stocké dans l'attente de son utilisation pour le montage sur un véhicule.

Le montage s'effectue simplement en retirant la pellicule de protection 7, après quoi on plaque le cordon 4 au contact de la porte du véhicule automobile. Avec un adhésif thermoactivable, variantes qui ne tombent pas sous l'étendue des revendications, on peut procéder d'abord au chauffage de la couche d'adhésif notamment par une source infrarouge ou bien mettre en place le module 2 contre la porte puis chauffer portant le cordon de collage à la température nécessaire pour activer l'adhésif, par exemple en chauffant la porte.

La figure 6 montre une variante de réalisation du cordon de joint d'étanchéité composite 4 où la surface de la couche d'adhésif 6 qui entre en liaison avec partie élastique 5 du cordon de joint d'étanchéité est texturée afin d'augmenter la surface de contact entre ces deux parties du cordon de joint composite. Une telle couche d'adhésif 6 peut être réalisée notamment par dépose dans la cavité 10 d'une matière adhésive avec une buse 12 de section appropriée. La partie élastique 5 du cordon de joint d'étanchéité composite 4 est ensuite obtenue de préférence en extrudant une matière visqueuse ou pâteuse sur la surface texturée de la couche d'adhésif 6. La matière extrudée de la partie élastique 5 du cordon de joint d'étanchéité 4 épouse le contour de la face texturée de la couche 6 suivant une surface de contact plus importante qu'avec un contact plan, d'où il résulte une meilleure adhésion.

La figure 5 illustre un autre aspect de l'invention où le cordon de joint d'étanchéité composite 4 est formé directement sur l'un des premier ou second éléments.

Après avoir déposé, à l'aide d'un procédé d'extrusion, une couche d'adhésif 8 sur l'une des faces dudit élément et selon le motif d'étanchéité désiré, on procède alors, par un procédé d'extrusion similaire au précédent, sur la couche d'adhésif 8 ou simplement au niveau de la partie d'accrochage 9, et selon le même motif d'étanchéité, au dépôt d'un produit mono-composant ou pluri-composants, ce produit devant former la partie élastique 5 du cordon de joint d'étanchéité composite 4. Dans le cas d'un produit à plusieurs composants, le joint 4 peut être formé, dans une tête d'extrusion, par réaction d'au moins deux composants amenés séparément au sein de ladite tête d'extrusion.

Le module de porte 2 a une structure identique à celle du module des figures 2, 3, 6. Il est pourvu d'une partie élastique 5 disposée en périphérie du module sur ou à côté de l'habillage .

La partie élastique 5 est liée sur une première face au module 2 et est protégée sur une autre face par une pellicule 7, la face protégée étant adhésive après retrait de la pellicule.

A cet effet, la partie élastique 5 du cordon 4 peut être recouverte d'un adhésif réticulable à l'humidité, la pellicule 7 ayant une fonction de barrière à l'humidité, et étant constituée par exemple en polyéthylène basse densité. Le matériau adhésif utilisable peut être choisi parmi des systèmes à base de polyuréthanne, avantageusement thermoplastique, éventuellement modifié par à un polymère notamment un élastomère, pour conférer à l'adhésif des propriétés mécaniques souhaitées. Parmi ces matériaux, on préfère tout particulièrement des pré-polymères de polyuréthanne à squelette polymère ou oligomère, notamment poly éther et/ou polyester. Une composition de polyuréthanne thermoplastique et réticulable à l'humidité adaptée à cet emploi peut être obtenue par la réaction à chaud de 2 parts d'un polyesterdiol commercialisé sous la marque DYNACOLL^{®} 7231 par la société Degussa-Huls avec une part de prépolymère d'isocyanate à base de poly éther commercialisé sous la marque LUPRANAT^{®} MP130 par la société BASF.

La fabrication de la partie élastique 5 du cordon de joint d'étanchéité 4 a lieu d'une manière quasiment similaire de celle décrite plus haut en référence à la figure 4, sauf en ce qui concerne la phase de dépôt qui s'effectue directement sur la surface d'un des premier ou second éléments, sans passer par un moule de transfert.

Par ailleurs, l'application du cordon 4 sur le second élément (ou sur le premier élément) peut avoir lieu par pressage du premier élément (ou second élément), le cordon de joint d'étanchéité ayant encore une face supérieure adhésive pour la liaison avec ledit élément (premier ou second), le durcissement
ou la prise de la matière du coeur du cordon de joint d'étanchéité pouvant être obtenus en maintenant serrés l'un contre l'autre les premier et second éléments.

Dans une autre variante de réalisation, ne tombant pas sous l'étendue des revendications, l'adhésif peut être choisi parmi des matières activables par voie thermique, notamment des adhésifs « hot melt », ou par voie chimique. Il n'y a alors plus un besoin impératif de prévoir de pellicule de protection 7, bien qu'elle soit encore préférée pour protéger la surface activable de toute poussière ou salissures susceptibles de contrarier l'activation et/ou l'adhérence de la face activée.

L'invention a été décrite dans le cas particulier de la fabrication d'un module de porte prête au montage sur un cadre de porte de véhicule automobile mais s'applique à la réalisation de tout autre élément modulaire, notamment des modules de fenêtres utilisables dans l'industrie automobile ou dans la construction de bâtiment (serre, vérandas...)

## Revendications

1. Procédé de réalisation par extrusion d'un cordon de joint d'étanchéité composite (4) sur un élément choisi entre un premier élément (1) et un second élément (2), ledit cordon de joint d'étanchéité composite (4) étant continu de forme et de section déterminée et comportant au moins une partie d'accrochage (9) adaptée pour coopérer avec l'un des éléments, au moins une partie élastique (5), et au moins une partie adhésive (6) adaptée pour coopérer au niveau de l'autre élément, lorsque les premier et second éléments seront fixés ensemble, **caractérisé en ce que** la partie élastique (5) présente sur sa surface périphérique une peau formant une enveloppe étanche, et la partie adhésive est constituée d'un adhésif à pouvoir collant permanent.

2. Procédé selon la revendication 1, **caractérisé en ce que** l'on dépose le cordon de joint d'étanchéité composite (4) au préalable dans un moule de transfert avant son application sur l'un des premier ou second éléments.

3. Procédé selon la revendication 1, **caractérisé en ce que** l'on dépose directement le cordon de joint d'étanchéité composite (4) sur l'un des premier ou second éléments.

4. Procédé selon l'une quelconque des revendications 1 à 3, **caractérisé en que** le cordon de joint d'étanchéité composite (4) est formé par extrusion d'un produit mono-composant.

5. Procédé selon l'une quelconque des revendications 1 à 3, **caractérisé en que** le cordon de joint d'étanchéité composite (4) est formé, dans une tête d'extrusion (12), par réaction d'au moins deux composants amenés séparément au sein de ladite tête d'extrusion.

6. Procédé selon l'une quelconque des revendications 1 à 5, **caractérisé en que** la partie élastique (5) du cordon de joint d'étanchéité composite (4) est un matériau moussé.

7. Procédé selon L'une quelconque des revendications 1 à 5, **caractérisé en que** ta partie élastique (5) est à base d'élastomère thermoplastique ou de polyuréthanne, modifié ou non par un élastomère.

8. Procédé selon l'une quelconque des revendications 1 à 7, **caractérisé en que** la partie élastique (5) représente au moins 50 % en volume du cordon de joint d'étanchéité composite (4).

9. Procédé selon L'une quelconque des revendications 1 à 5, **caractérisé en que** la partie adhésive (6) est venue avec une pellicule pelable (7) et est déposée par transfert sur la partie élastique (5) du joint d'étanchéité composite (4), lors de l'enlèvement de ladite pellicule pelable (7).

10. Procédé selon l'une quelconque des revendications 1 à 5, **caractérisé en que** la partie adhésive (6) et la partie élastique du cordon de joint d'étanchéité composite (4) sont formés à partir d'un produit identique.

11. Procédé selon l'une quelconque des revendications 1 à 5, **caractérisé en que** la partie d'accrochage (9) du cordon de joint d'étanchéité composite (4) est constituée d'une partie adhésive (8).

12. Procédé selon l'une quelconque des revendications 1 à 5 et 11, **caractérisé en que** la partie adhésive (6, 8) est co-extrudée avec la partie élastique (5).

13. Procédé selon l'une quelconque des revendications 1 à 5 et 11, **caractérisé en que** la partie adhésive (6, 8) est déposée sur l'un des premier et second éléments et la partie élastique (5) est déposée sur l'autre desdits premier et second éléments.

14. Procédé selon l'une quelconque des revendications précédentes, **caractérisé en ce que** la pellicule pelable (7) est constituée d'un produit pulvérisable.

## Claims

1. Method of producing, by extrusion, a composite sealing bead (4) on a chosen element between a first element (1) and a second element (2), said composite sealing bead (4) being continuous of shape and of defined cross section and having at least one catching part (9), suitable for cooperating with one of the elements, at least one elastic part (5) and at least one adhesive part (6) that is suitable for cooperating with the other element when the first and second elements are to be fitted together, **characterized in that** the elastic part (5) has, on its peripheral surface, a skin forming an impermeable envelope, and the adhesive part consists of a pressure-sensitive (permanent tack) adhesive.

2. Method according to Claim 1, **characterized in that** the composite sealing bead (4) is deposited beforehand in a transfer mold before it is applied to either of the first and second elements.

3. Method according to Claim 1, **characterized in that** the composite sealing bead (4) is deposited directly on either of the first and second elements.

4. Method according to any one of Claims 1 to 3, **characterized in that** the composite sealing bead (4) is formed by extruding a one-component product.

5. Method according to any one of Claims 1 to 3, **characterized in that** the composite sealing bead (4) is formed in an extrusion head (12) by reaction between at least two components brought separately into said extrusion head.

6. Method according to any one of Claims 1 to 5, **characterized in that** the elastic part (5) of the composite sealing bead (4) is a foamed material.

7. Method according to any one of Claims 1 to 5, **characterized in that** the elastic part (5) is based on a thermoplastic elastomer or on a polyurethane which may or may not be modified by an elastomer.

8. Method according to any one of Claims 1 to 7, **characterized in that** the elastic part (5) represents at least 50% by volume of the composite sealing bead (4).

9. Method according to any one of Claims 1 to 5, **characterized in that** the adhesive part (6) is formed with a peelable film (7) and is deposited by transfer onto the elastic part (5) of the composite sealing bead (4) during removal of said peelable film (7).

10. Method according to any one of Claims 1 to 5, **characterized in that** the adhesive part (6) and the elastic part of the composite sealing bead (4) are formed from an identical product.

11. Method according to any one of Claims 1 to 5, **characterized in that** the catching part (9) of the composite sealing bead (4) consists of an adhesive part (8).

12. Method according to any one of Claims 1 to 5 and 11, **characterized in that** the adhesive part (6, 8) is coextruded with the elastic part (5).

13. Method according to any one of Claims 1 to 5 and 11, **characterized in that** the adhesive part (6, 8) is deposited on one of the first and second elements and the elastic part (5) is deposited on the other of said first and second elements.

14. Method according to any one of the preceding claims, **characterized in that** the peelable film (7) consists of a sprayable product.

## Patentansprüche

1. Verfahren zur Herstellung einer Dichtungsraupe (4) aus einem Verbundmaterial auf einem Element, das aus einem ersten Element (1) und einem zweiten Element (2) ausgewählt ist, durch Extrudieren, wobei die Dichtungsraupe (4) aus einem Verbundmaterial eine kontinuierliche Form und einen festgelegten Querschnitt hat und mindestens einen Befestigungsteil (9), der geeignet ist, mit einem der Elemente zusammenzuwirken, mindestens einen elastischen Teil (5) und mindestens einen haftfähigen Teil (6), der geeignet ist, mit dem anderen Element zusammenzuwirken, wenn das erste und das zweite Element zusammen befestigt werden, umfasst, **dadurch gekennzeichnet, dass** der elastische Teil (5) auf seiner umfänglichen Oberfläche eine Folie aufweist, die eine dichte Umhüllung bildet, und der haftfähige Teil von einem Klebstoff mit permanenter Klebkraft gebildet wird.

2. Verfahren nach Anspruch 1, **dadurch gekennzeichnet, dass** die Dichtungsraupe (4) aus einem Verbundmaterial vor ihrem Aufbringen auf das erste oder das zweite Element in einer Transferform angeordnet wird.

3. Verfahren nach Anspruch 1, **dadurch gekennzeichnet, dass** die Dichtungsraupe (4) aus einem Verbundmaterial direkt auf das erste oder das zweite Element aufgebracht wird.

4. Verfahren nach einem der Ansprüche 1 bis 3, **dadurch gekennzeichnet, dass** die Dichtungsraupe (4) aus einem Verbundmaterial durch Extrudieren eines Einkomponentenmaterials gebildet wird.

5. Verfahren nach einem der Ansprüche 1 bis 3, **dadurch gekennzeichnet, dass** die Dichtungsraupe (4) aus einem Verbundmaterial in einem Extrudiermundstück (12) durch Reaktion von mindestens zwei Komponenten gebildet wird, die dem Extrudiermundstück separat zugeführt werden.

6. Verfahren nach einem der Ansprüche 1 bis 5, **dadurch gekennzeichnet, dass** der elastische Teil (5) der Dichtungsschnur (4) aus einem Verbundmaterial ein Schaumstoff ist.

7. Verfahren nach einem der Ansprüche 1 bis 5, **dadurch gekennzeichnet, dass** der elastische Teil (5) auf der Basis von einem thermoplastischen Elastomer oder einem gegebenenfalls mit einem Elastomer modifizierten Polyurethan ist.

8. Verfahren nach einem der Ansprüche 1 bis 7, **dadurch gekennzeichnet, dass** der elastische Teil (5) mindestens 50 Vol.-% der Dichtungsraupe (4) aus einem Verbundmaterial ausmacht.

9. Verfahren nach einem der Ansprüche 1 bis 5, **dadurch gekennzeichnet, dass** der haftfähige Teil (6) mit einer abziehbaren Folie (7) versehen ist und durch Übertragung auf den elastischen Teil (5) der Verbunddichtung (4) während des Abziehens der abziehbaren Folie (7) aufgebracht wird.

10. Verfahren nach einem der Ansprüche 1 bis 5, **dadurch gekennzeichnet, dass** der haftfähige Teil (6) und der elastische Teil der Dichtungsraupe (4) aus einem Verbundmaterial aus ein und demselben Produkt gebildet werden.

11. Verfahren nach einem der Ansprüche 1 bis 5, **dadurch gekennzeichnet, dass** der Befestigungsteil (9) der Dichtungsraupe (4) aus einem Verbundmaterial von einem haftfähigen Teil (8) gebildet wird.

12. Verfahren nach einem der Ansprüche 1 bis 5 und 11, **dadurch gekennzeichnet, dass** der haftfähige Teil (6, 8) mit dem elastischen Teil (5) coextrudiert wird.

13. Verfahren nach einem der Ansprüche 1 bis 5 und 11, **dadurch gekennzeichnet, dass** der haftfähige Teil (6, 8) auf das erste oder zweite Element und der elastische Teil (5) auf das andere von erstem oder zweitem Element aufgebracht wird.

14. Verfahren nach einem der vorhergehenden Ansprüche, **dadurch gekennzeichnet, dass** die abziehbare Folie (7) aus einem aufsprühbaren Material gebildet wird.
